(19) Europäisches Patentamt
European Patent Office
Office européen des brevets

(11) **EP 4 682 977 A1**

(12) **EUROPEAN PATENT APPLICATION**
published in accordance with Art. 153(4) EPC

(43) Date of publication:
**21.01.2026 Bulletin 2026/04**

(21) Application number: **24854398.5**

(22) Date of filing: **08.08.2024**

(51) International Patent Classification (IPC):
$H01M\ 4/36^{(2006.01)}$    $H01M\ 4/525^{(2010.01)}$
$H01M\ 4/131^{(2010.01)}$    $H01M\ 10/052^{(2010.01)}$
$H01M\ 4/505^{(2010.01)}$    $H01M\ 4/1391^{(2010.01)}$
$H01M\ 4/02^{(2006.01)}$

(52) Cooperative Patent Classification (CPC):
H01M 4/02; H01M 4/131; H01M 4/1391;
H01M 4/36; H01M 4/505; H01M 4/525;
H01M 10/052; Y02E 60/10

(86) International application number:
**PCT/KR2024/011810**

(87) International publication number:
**WO 2025/037847 (20.02.2025 Gazette 2025/08)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **11.08.2023   KR 20230105931**
            **18.01.2024   KR 20240008351**

(71) Applicant: **LG ENERGY SOLUTION, LTD.**
**Seoul 07335 (KR)**

(72) Inventors:
• **CHAE, Seul Ki**
  **Daejeon 34122 (KR)**
• **PARK, Byung Chun**
  **Daejeon 34122 (KR)**
• **KIM, Ji Hye**
  **Daejeon 34122 (KR)**
• **LEE, Si Yeol**
  **Daejeon 34122 (KR)**
• **LEE, Sang Yeop**
  **Daejeon 34122 (KR)**

(74) Representative: **Hoffmann Eitle**
**Patent- und Rechtsanwälte PartmbB**
**Arabellastraße 30**
**81925 München (DE)**

(54) **POSITIVE ELECTRODE ACTIVE MATERIAL, AND POSITIVE ELECTRODE SLURRY, POSITIVE ELECTRODE, AND LITHIUM SECONDARY BATTERY, EACH COMPRISING SAME**

(57)    The present invention provides a positive electrode active material, and a positive electrode, a positive electrode slurry, and a lithium secondary battery including the positive electrode active material, wherein the positive electrode active material includes a lithium nickel-based oxide including nickel, cobalt, and manganese and having a nickel content of 90 mol% or greater among metals excluding lithium, and a metal element M1 doped on the lithium nickel-based oxide, wherein the metal element M1 is one or more selected from the group consisting of Al, Ti, Zr, W, Mo, and Nb, and wherein the positive electrode active material has an absolute value of zeta potential measured at room temperature is 30 mV or greater.

FIG. 1

**Description**

## TECHNICAL FIELD

This application claims the benefit of Nos. 10-2023-0105931, filed on August 11, 2023, and 10-2024-0008351, filed on January 18, 2024, in the Korean Intellectual Property Office, the disclosures of which are incorporated herein in their entirety.

The present invention provides a positive electrode active material, and a positive electrode slurry, a positive electrode, and a lithium secondary battery including the same.

## BACKGROUND ART

Recently, the demand for a small and lightweight secondary battery having a relatively high capacity is rapidly increased due to the rapid spread of electronic devices using batteries, such as cell phones, notebook computers, electric vehicles, and the like. Particularly, a lithium secondary battery is lightweight and has a high energy density, and thus, is attracting attention as a driving power source for a portable electronic device. A small lithium secondary battery used in such a portable electronic device is required to have excellent battery performance under high energy density, high temperature, and high voltage conditions. Therefore, research and development efforts for improving the performance of a lithium secondary battery have been actively conducted.

Typically, a lithium secondary battery includes an electrode assembly including a positive electrode, a negative electrode, and a separator interposed between the positive electrode and the negative electrode, and an electrolyte for impregnating the electrode assembly. The positive electrode and the negative electrode may each be manufactured by coating an electrode slurry, in which an active material, a binder, and a conductive material are dispersed in a solvent, on a current collector.

In this case, particle aggregation may occur in the electrode slurry due to Van der Waals force acting between the active materials or between the active material and the conductive material and/or the binder. Such particle aggregation leads to gelation of the slurry, and as a result, an electrode active material layer is not uniformly formed, so that the resistance inside the electrode may increase and the capacity thereof may decrease. This, in turn, causes degradation in battery lifespan and safety. If the slurry is severely gelled, it may be impossible to manufacture an electrode at all.

Particularly, if a lithium nickel cobalt manganese-based oxide (hereinafter, NCM oxide) is used as an active material, increasing the content of nickel to implement a high capacity may make a slurry more susceptible to the gelation problem, so that it is necessary to develop technology capable of simultaneously achieving capacity improvement and solving the slurry gelation problem.

## DISCLOSURE OF THE INVENTION

### TECHNICAL PROBLEM

The present invention is to provide a positive electrode active material having improved dispersibility, and a positive electrode slurry, a positive electrode, and a lithium secondary battery including the same.

### TECHNICAL SOLUTION

The present invention provides a positive electrode active material which includes a lithium nickel-based oxide including nickel, cobalt, and manganese and having a nickel content of 90 mol% or greater among metals excluding lithium, and a metal element M1 doped on the lithium nickel-based oxide, wherein the metal element M1 is one or more selected from the group consisting of Al, Ti, Zr, W, Mo, and Nb, and wherein the positive electrode active material has an absolute value of zeta potential measured at room temperature is 30 mV or greater.

In addition, the present invention provides a positive electrode slurry including the above-described positive electrode active material, a binder, a conductive material, and a solvent.

In addition, the present invention provides a positive electrode including a positive electrode current collector, and a positive electrode active material layer provided on at least one surface of the positive electrode current collector, wherein the positive electrode active material layer includes the above-described positive electrode active material.

In addition, the present invention provides a lithium secondary battery including the above-described positive electrode, a negative electrode including a negative electrode active material, a separator interposed between the positive electrode and the negative electrode, and an electrolyte.

## ADVANTAGEOUS EFFECTS

A positive electrode active material according to the present invention has an excellent capacity due to a high content of nickel, and may have a reduced amount of use of cobalt accordingly, and thus, is advantageous in terms of material supply and price.

In addition, the positive electrode active material includes, as a doping element, a metal element having a high oxidation number compared to a transition metal included in a lithium nickel-based oxide, which is a base material, thereby exhibiting a zeta potential of 30 mV or greater, so that it is possible to form a high repulsive force between particles.

Accordingly, since it is possible to effectively solve problems of surface instability and dispersibility degradation of a high-nickel positive electrode active material, and to prevent the above-described problem of positive electrode slurry gelation, it is ultimately possible to implement a lithium secondary battery advantageous in capacity and lifespan properties.

## BRIEF DESCRIPTION OF THE DRAWINGS

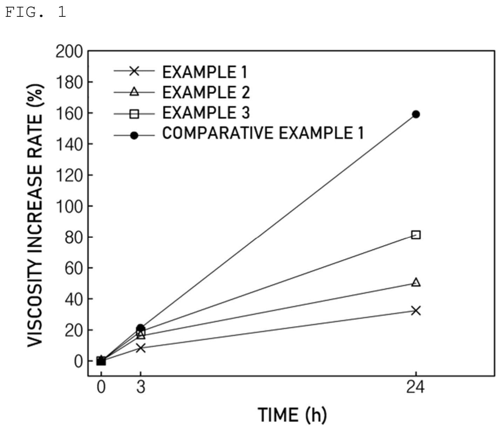

FIG. 1 is a graph showing a viscosity increase rate of a positive electrode slurry including a positive electrode active material prepared in each of Examples and Comparative Examples.

## BEST MDOE FOR CARRYING OUT THE INVENTION

Hereinafter, the present invention will be described in detail.

In the present invention, "zeta potential" is an index indicating the degree of surface charge amount of positive electrode active material particles, and may be measured using a Zetasizer Pro (manufactured by Malvern Panalytical) instrument at 25 °C after dissolving a positive electrode active material to be measured by diluting the same to 0.002 wt% in N-methyl-2-pyrrolidone (NMP).

In the present invention, "viscosity" may be measured by submerging a spindle of a B-type viscometer in a slurry to be measured and rotating the spindle at 12 rpm for 3 minutes.

In the present invention, "primary particle" refers to a particle unit in which grain boundaries do not exist in appearance when observed in a range of vision of 5000 times to 20000 times using a scanning electron microscope.

In the present invention, "$D_{50}$" refers to a particle size corresponding to 50% of a cumulative volume in a volume cumulative particle size distribution of powder to be measured, and may be measured using a laser diffraction method. For example, the $D_{50}$ may be measured by dispersing positive electrode active material powder in a dispersion medium, and then introducing the mixture into a commercially available laser diffraction particle size measurement device (e.g., Microtrac S-3500) to be irradiated with an ultrasonic wave of about 28 kHz to an output of 60W, thereby obtaining a volume cumulative particle size distribution graph, and then obtaining a particle size at a point at which the cumulative volume is 50% in the obtained graph.

Hereinafter, each component of the present invention will be described in detail.

### <Positive electrode active material>

The present invention relates to a positive electrode active material, and more specifically, to a positive electrode active material for a lithium secondary battery.

The positive electrode active material of the present invention includes a lithium nickel-based oxide including nickel, cobalt, and manganese and having a nickel content of 90 mol% or greater among metals excluding lithium, and a metal element M1 doped on the lithium nickel-based oxide, wherein the metal element M1 is one or more selected from the group consisting of Al, Ti, Zr, W, Mo, and Nb, and wherein the positive electrode active material has an absolute value of zeta potential measured at room temperature is 30 mV or greater.

As described above, in the lithium nickel-based oxide, if the content of nickel is increased, it is possible to secure a high capacity, but there is a problem in that structural stability is degraded. Specifically, a high-nickel positive electrode active material has a large amount of lithium compounds remaining on the surface thereof, which may cause a side reaction during charging and discharging processes, thereby generating a gas. In addition, among the remaining lithium compounds, a basic material such as LiOH increases the pH of the positive electrode active material, which causes a cross-linking reaction of a binder in a positive electrode slurry, and thus, may lead to gelation of the slurry. The gelation of the slurry increases viscosity, thereby degrading processability as well as preventing uniform application, so that the performance of an electrode itself may be degraded.

Accordingly, the present inventors have found a correlation between a doping element and a zeta potential in an ultra-high nickel positive electrode active material having a nickel content of 90 mol% or greater, and have solved the above-described problem by providing a positive electrode active material having a zeta potential of 30 mV or greater by means of doping.

Specifically, in a nickel cobalt manganese-based oxide having a Ni content of 90 mol% or greater, Ni has an oxidation number of +2 to +3, and if Al, which has an oxidation number +3, is used as a doping element, the Ni is substituted with the Al having a higher oxidation number than the Ni, resulting in occurrence of oxygen deficiency, and as a result, oxygen vacancy is reduced to maintain charge neutrality, so that a zeta potential has a greater negative value. If an absolute value of the zeta potential increases as described above, repulsive force between positive electrode active material particles increases, which may improve dispersibility, so that there is ultimately an effect of preventing gelation of a positive electrode slurry including a high-nickel positive electrode active material. In addition, cases in which Ti(+4), Zr(+4), W(+6), Mo(+5), and Nb(+5) having a high oxidation number are used as doping elements also implement the above-described effect by a mechanism of substitution with Ni or Co atoms.

In an embodiment of the present invention, the positive electrode active material may have an absolute value of zeta potential measured at room temperature of 35 mV or greater, preferably 40 mV or greater, and more preferably 45 mV or greater. However, considering practical feasibility, the absolute value may be 60 mV or less.

In an embodiment of the present invention, the metal element M1 may be one or more selected from the group consisting of Al, Ti, Zr, W, Mo, and Nb, preferably Al, Ti, or a combination thereof, and more preferably, Al.

Meanwhile, the metal element M1 may be included in a content of 3,000 ppm to 10,000 ppm, preferably 6,000 ppm to 10,000 ppm, and more preferably 8,000 ppm to 10,000 ppm based on the total weight of the positive electrode active material. If the content of the M1 is 3,000 ppm or greater, it is easy to adjust the absolute value of the zeta potential to 30 mV or greater through the above-described mechanism. However, as the content of the M1 increases, the capacity decreases, so that it is preferable that the content of the M1 is 10,000 ppm or less.

The content of the metal element M1 included in the positive electrode active material may be measured by an inductively coupled plasma optical emission spectroscopy (ICP-OES) method.

If the content of nickel among all metals excluding lithium in the lithium nickel-based oxide is less than 90 mol%, a stable structure is already formed due to a relatively high content of cobalt, so that an effect to be achieved by doping the M1 is insignificant.

In addition, if manganese is not included in the lithium nickel-based oxide, since the oxidation number of nickel is +3, the above-described effect of the occurrence of oxygen deficiency and the increase in absolute value of zeta potential due to the substitution of Al having an oxidation number +3 is insignificant, so that it is difficult to implement an effect intended in the present invention.

In an embodiment of the present invention, the lithium nickel-based oxide may have a nickel content of 92 mol% or greater, preferably 93 mol% or greater, and more preferably 95 mol% to 99 mol%, among all metals excluding lithium.

In an embodiment of the present invention, the lithium nickel-based oxide may have a manganese content of 0.5 mol% or greater, preferably 0.8 mol% or greater, and more preferably 1.0 mol% or greater, among all metals excluding lithium, but may be 5.0 mol% or less.

Specifically, the lithium nickel-based oxide may have a composition of Formula 1 below.

$$[\text{Formula 1}] \qquad \text{Li}_{1+x}(\text{Ni}_a\text{Co}_b\text{Mn}_c\text{M1}_d\text{M2}_e)\text{O}_2$$

In Formula 1 above, M1 is one or more selected from the group consisting of Al, Ti, Zr, W, Mo, and Nb, M2 is one or more selected from the group consisting of Cu, Fe, V, Cr, Zn, In, Ta, Y, La, Sr, Ga, Sc, Gd, Sm, Ca, Ce, Mg, and B, and 1+x, a, b, c, d, and e are each an atomic fraction of an independent element, wherein $-0.2 \leq x \leq 0.2$, $0.90 \leq a < 1$, $0 < b < 0.1$, $0 < c < 0.1$, $0 < d \leq 0.05$, $0 \leq e \leq 0.05$, and $a+b+c+d+e=1$.

The 1+x represents the molar ratio of lithium in the lithium nickel-based oxide, wherein the x may satisfy $-0.1 \leq x \leq 0.2$, or $0 \leq x \leq 0.2$. When the molar ratio of lithium satisfies the above-described range, the crystal structure of the lithium nickel-based oxide may be stably formed.

The a represents the molar ratio of nickel among all metals excluding lithium in the lithium nickel-based oxide, wherein the a may satisfy $0.92 \leq a < 1$, $0.93 \leq a < 1$, or $0.95 \leq a < 1$. When the molar ratio of nickel satisfies the above-described range, high energy density may be achieved to implement high capacity.

The b represents the molar ratio of cobalt among all metals excluding lithium in the lithium nickel-based oxide, wherein the b may satisfy $0 < b \leq 0.025$, $0 < b \leq 0.015$, or $0 < b \leq 0.01$. When the molar ratio of cobalt satisfies the above-described range, good resistance properties and output properties may be implemented.

The c represents the molar ratio of manganese among all metals excluding lithium in the lithium nickel-based oxide, wherein the c may satisfy $0 < c \leq 0.050$, $0.005 \leq c \leq 0.040$, or $0.010 \leq c \leq 0.035$. When the molar ratio of manganese satisfies the above-described range, the positive electrode active material exhibits excellent structural stability.

The d represents the molar ratio of the M1 element among all metals excluding lithium in the lithium nickel-based oxide, wherein the d may satisfy $0 < d \leq 0.045$, $0.020 \leq d \leq 0.040$, or $0.030 \leq d \leq 0.040$.

The e represents the molar ratio of the M2 element among all metals excluding lithium in the lithium nickel-based oxide, and may be adjusted if necessary.

In an embodiment of the present invention, when the positive electrode active material is mixed with a binder and a conductive material in a solvent to prepare a positive electrode slurry, a viscosity increase rate according to Equation 1 below may be 100% or less.

$$[\text{Equation 1}]$$

$$\text{Viscosity increase rate} = (V_1 - V_0)/V_0 \times 100 (\%)$$

In Equation 1 above, $V_0$ is a viscosity of the positive electrode slurry measured at room temperature immediately after being prepared, and $V_1$ is a viscosity of the positive electrode slurry measured after being stored for 24 hours under the conditions of room temperature and a relative humidity of 10% or less.

Specifically, the positive electrode active material may have a viscosity increase rate of 80% or less, preferably 60% or less, and more preferably 40% or less according to Equation 1 above. As described above, the positive electrode active material according to the present invention has a zeta potential of 30 mV or greater, thereby having excellent dispersibility, and thus, may exhibit a low viscosity increase rate as described above.

Meanwhile, the positive electrode active material may be in the form of a secondary particle in which a plurality of primary particles are aggregated, and the positive electrode active material may have a $D_{50}$ of 2.5 am to 20 $\mu$m, but is not limited thereto.

**<Method for preparing positive electrode active material>**

Meanwhile, a method for preparing the positive electrode active material includes the steps of performing a co-precipitation reaction while supplying a transition metal-containing solution including a transition metal precursor, an ammonium cation complex forming agent and a basic compound to a reactor to form a nickel transition metal precursor having a nickel content of 90 mol% or greater, and mixing the nickel transition metal precursor, a lithium raw material, and a precursor including a metal element M1, followed by heattreating the mixture to form a lithium nickel-based oxide doped with the metal element M1. In this case, the heat-treatment may be performed at 600 °C to 900 °C, preferably 650 °C to 850 °C, and more preferably 700 °C to 800 °C for 15 hours to 24 hours.

A positive electrode active material prepared by the above-described preparation method has an absolute value of zeta potential measured at room temperature of 30 mV or greater.

The nickel transition metal precursor may be prepared by, for example, dissolving each transition metal precursor in a solvent to prepare a transition metal-containing solution, mixing the transition metal-containing solution, an ammonium cation complex forming agent, and a basic compound, and then performing a co-precipitation reaction on the mixture. In addition, if necessary, an oxidization agent or an oxygen gas may be further introduced during the co-precipitation reaction.

Meanwhile, the transition metal precursor may be an acetate, carbonate, nitrate, sulfate, halide, sulfide, or the like of each transition metal.

Specifically, the nickel precursor may be one or more selected from the group consisting of NiO, Ni-$CO_3 \cdot 2Ni(OH)_2 \cdot 4H_2O$, $NiC_2O_2 \cdot 2H_2O$, $Ni(NO_3)_2 \cdot 6H_2O$, $NiSO_4$, $NiSO_4 \cdot 6H_2O$, and nickel sulfide, and the cobalt precursor may be one or more selected from the group consisting of $Co(OH)_2$, $Co_3O_4$, $CoOOH$, $Co(OCOCH_3)_2 \cdot 4H_2O$, $Co(NO_3)_2 \cdot 6H_2O$, and $Co(SO_4)_2 \cdot 7H_2O$. In addition, the manganese precursor may be one or more selected from the group consisting of $Mn_2O_3$, $MnO_2$, $Mn_3O_4$, $MnCO_3$, $Mn(NO_3)_2$, $MnSO_4 \cdot H_2O$, manganese acetate, manganese halide, and manganese sulfide.

Meanwhile, the lithium raw material may be an oxide, hydroxide, oxyhydroxide, halide, nitrate, carbonate, acetate, oxalate, citrate, or sulfate, all of which contain lithium. More specifically, the lithium raw material may be one or more selected from the group consisting of $Li_2CO_3$, $LiNO_3$, $LiNO_2$, $LiOH$, $LiOH \cdot H_2O$, $LiH$, $LiF$, $LiCl$, $LiBr$, $LiI$, $Li_2O$, $Li_2SO_4$, $CH_3COOLi$, and $Li_3C_6H_6O_7$.

In this case, the input amount of each of the transition metal precursors may be determined in consideration of the molar ratio of a transition metal in a positive electrode active material to be finally produced.

Meanwhile, the ammonium cation complex forming agent may include at least one compound selected from the group consisting of $NH_4OH$, $(NH_4)_2SO_4$, $NH_4NO_3$, $NH_4Cl$, $CH_3COONH_4$, and $(NH_4)_2CO_3$, and the compound may be introduced into a reactor in the form of a solution in which the compound is dissolved in a solvent. In this case, as the solvent, water, or a mixture of an organic solvent (for example, an alcohol, etc.) which may be uniformly mixed with water and water may be used.

The basic compound may be at least one compound selected from the group consisting of NaOH, KOH, and $Ca(OH)_2$, and the compound may be introduced into a reactor in the form of a solution in which the compound is dissolved in a solvent. In this case, as the solvent, water, or a mixture of an organic solvent (for example, an alcohol, etc.) which may be uniformly mixed with water and water may be used.

If a transition metal-containing solution, an ammonium cation complex forming agent, and a basic compound are introduced into a reactor and stirred as described above, transition metals in the transition metal-containing solution are co-precipitated, thereby generating precursor particles in the form of transition metal hydroxides.

In this case, the transition metal-containing solution, the ammonium cation complex forming agent, and the basic compound are each introduced in an amount such that the pH of a reaction solution is within a desired range.

If the precursor particles are formed by the method described above, a precursor is separated from the reaction solution and obtained. For example, the reaction solution is filtered to separate a precursor from the reaction solution, and then the separated precursor may be washed with water and dried to obtain the precursor. In this case, if necessary, a process such as pulverization and/or classification may be performed.

The nickel transition metal precursor, a lithium raw material, and a precursor including a metal element M1 are mixed and then heat-treated to prepare a lithium nickel-based oxide.

As the lithium raw material, a sulfate, nitrate, acetate, carbonate, oxalate, citrate, halide, hydroxide, or oxyhydroxide, all of which contain lithium, may be used, and for example, $Li_2CO_3$, $LiNO_3$, $LiNO_2$, $LiOH$, $LiOH \cdot H_2O$, $LiH$, $LiF$, $LiCl$, $LiBr$, $LiI$, $CH_3COOLi$, $Li_2O$, $Li_2SO_4$, $CH_3COOLi$, $Li_3C_6H_5O_7$, or a mixture thereof may be used.

Meanwhile, the lithium raw material and the nickel transition metal precursor may be mixed such that the molar ratio of Li : all metals in the precursor is 1:1 to 1.2:1, preferably 1:1 to 1.1:1. If the mixing ratio of the lithium raw material and the metals in the precursor satisfies the above-described range, a layered crystal structure of the lithium nickel-based oxide is well developed, so that a positive electrode active material having excellent capacity properties and structural stability may be prepared.

In addition, the precursor including a metal element M1 may be an oxide, hydroxide, oxyhydroxide, halide, nitrate, carbonate, acetate, oxalate, citrate, or sulfate, all of which contain the metal element M1.

If a metal element M2 is additionally doped, the type and addition amount of the metal element M2 may be adjusted in consideration of the type and content of a metal element M2 included in the positive electrode active material described above.

**<Positive electrode slurry>**

Next, a positive electrode slurry according to the present invention will be described.

The positive electrode slurry according to the present invention includes the above-described positive electrode active material of the present invention, a binder, a conductive material, and a solvent.

In an embodiment of the present invention, the positive electrode slurry may have a solid content of 70 wt% or greater based on the total weight of the positive electrode slurry and may have a viscosity of 3,500 cP or less. That is, by including the positive electrode active material, a solid content is secured to a predetermined level or higher without excessively increasing viscosity, so that it means it is possible to secure both the capacity and processibility of a positive electrode. The higher the solid content in the slurry, the more preferable it is in terms of suppressing binder migration and increasing electrode productivity, but in order to prevent the viscosity from being excessively increased, it is preferable that the solid content is 80 wt% or less. However, in the case of a dry electrode, the solid content thereof may be 100 wt%.

Meanwhile, the viscosity of the positive electrode slurry may be 3,500 cP or less, preferably 3,000 cP or less, and more preferably 2,500 cP or less in consideration of ease of slurry transfer and coating processibility. However, considering slurry precipitation and phase stability, it is preferable that the viscosity is 500 cP or greater.

In an embodiment of the present invention, the binder may be one or more selected from the group consisting of polyvinylidene fluoride (PVDF), a polyvinylidene fluoridehexafluoropropylene copolymer (PVDF-co-HFP), polyvinyl alcohol, polyacrylonitrile, carboxymethyl cellulose (CMC), starch, hydroxypropyl cellulose, regenerated cellulose, polyvinylpyrrolidone, polytetrafluoroethylene, polyethylene, polypropylene, an ethylene-propylene-diene monomer (EPDM) rubber, a sulfonated-EPDM, styrene butadiene rubber (SBR), fluorine rubber, and various copolymers thereof, and preferably, may be polyvinylidene fluoride.

The binder may be included in an amount of 0.5 wt% to 3.0 wt%, preferably 1.0 wt% to 2.5 wt%, and more preferably 1.5 wt% to 2.5 wt% based on the total weight of solids in the positive electrode slurry. If the content of a binder is in the above-described range, adhesion to a current collector and bonding between particles may be sufficiently secured, so that durability of a positive electrode may be improved and initial resistance may be maintained low.

The conductive material may be one or more selected from the group consisting of graphite such as natural graphite or artificial graphite; carbon black such as acetylene black, Ketjen black, channel black, furnace black, lamp black, or thermal black; a carbon-based material such as carbon fiber or carbon nanotubes; metal powder or metal fiber of such as copper, nickel, aluminum, or silver; a conductive whisker such as zinc oxide or potassium titanate; a conductive metal oxide such as titanium oxide; and a conductive polymer such as a polyphenylene derivative, preferably carbon nanotubes or carbon black, and more preferably carbon nanotubes.

The conductive material may be included in an amount of 0.1 wt% to 2.5 wt%, preferably 0.3 wt% to 2.0 wt%, and more preferably 0.5 wt% to 2.0 wt% based on the total weight of solids in the positive electrode slurry. If the content of a conductive material is in the above-described range, it is preferable in terms of reducing a dead volume while maintaining conductivity between active materials.

In addition, the positive electrode slurry may optionally further include a dispersant, and the dispersant may be hydrogenated nitrile butadiene rubber (HNBR).

Meanwhile, the solvent of the positive electrode slurry may be a solvent commonly used in the art, and for example, N-methylpyrrolidone (NMP), dimethyl sulfoxide (DMSO), isopropyl alcohol, dimethyl formamide (DMF), acetone, water, a mixture of two or more thereof, or the like may be used. The solvent may be used in an amount adjusted to allow the positive electrode slurry to have the above-described viscosity.

**<Positive electrode>**

In addition, a positive electrode according to the present invention includes a positive electrode current collector, and a positive electrode active material layer provided on at least one surface of the positive electrode current collector, wherein the positive electrode active material layer includes the above-described positive electrode active material. In addition, the positive electrode according to the present invention includes the positive electrode active material layer formed by coating the above-described positive electrode slurry on at least one surface of the positive electrode current collector.

Since the positive electrode active material and the positive electrode slurry are described above, detailed descriptions thereof will be omitted, and hereinafter, only the rest of the components will be described in detail.

The positive electrode current collector may include a highly conductive metal, and is not particularly limited as long as it is not reactive in a voltage range of a battery while a positive electrode active material layer is able to be easily adhered to the positive electrode current collector. As the positive electrode current collector, for example, stainless steel, aluminum, nickel, titanium, fired carbon, or aluminum or stainless steel that is surface-treated with one of carbon, nickel, titanium, silver, and the like may be used. Also, the positive electrode current collector may typically have a thickness of 3 $\mu$m to 500 $\mu$m, and microscopic irregularities may be formed on the surface of the current collector to improve the adhesive force of the positive electrode active material. For example, the positive electrode current collector may be used in various forms such as a film, a sheet, a foil, a net, a porous body, a foam, and a non-woven body.

The positive electrode may be manufactured according to a typical method for manufacturing a positive electrode except that the positive electrode material described above is used. Specifically, the positive electrode may be manufactured by applying the positive electrode slurry on a positive electrode current collector, followed by drying and roll-pressing, or by casting the positive electrode slurry on a separate support, and then laminating a film obtained by being peeled off from the support on the positive electrode current collector.

**Lithium secondary battery**

Next, a lithium secondary battery according to the present invention will be described.

Specifically, the lithium secondary battery includes a positive electrode, a negative electrode including a negative electrode active material, a separator interposed between the positive electrode and the negative electrode, and an electrolyte. Since the positive electrode is the same as that described above, a detailed description thereof will be omitted, and hereinafter, only the rest of the components will be described in detail.

Also, the lithium secondary battery may optionally further include a battery case for accommodating an electrode assembly composed of the positive electrode, the negative electrode, and the separator, and a sealing member for sealing the battery case.

In the above lithium secondary battery, the negative electrode includes a negative electrode current collector and a negative electrode active material layer positioned on the negative electrode current collector.

The negative electrode current collector is not particularly limited as long as it has high conductivity without causing a chemical change in a battery, and for example, copper, stainless steel, aluminum, nickel, titanium, fired carbon, copper or stainless steel that is surface-treated with one of carbon, nickel, titanium, silver, and the like, an aluminum-cadmium alloy, and the like may be used. Also, the negative electrode current collector may typically have a thickness of 3 $\mu$m to 500 $\mu$m, and as in the case of the positive electrode current collector, microscopic irregularities may be formed on the surface of the negative electrode current collector to improve the binding force of the negative electrode active material. For example, the negative electrode current collector may be used in various forms such as a film, a sheet, a foil, a net, a porous body, a foam, and a non-woven body.

The negative electrode active material layer optionally includes a binder and a conductive material in addition to the negative electrode active material.

As the negative electrode active material, a compound capable of reversible intercalation and de-intercalation of lithium may be used. Specific examples thereof may include a carbonaceous material such as artificial graphite, natural graphite, graphitized carbon fiber, and amorphous carbon; a metallic compound alloyable with lithium such as Si, Al, Sn, Pb, Zn, Bi, In, Mg, Ga, Cd, an Si alloy, an Sn alloy, or an Al alloy; a metal oxide which may be doped and undoped with lithium such as $SiO_\beta$ ($0 < \beta < 2$), $SnO_2$, a vanadium oxide, and a lithium vanadium oxide; or a composite including the metallic compound and the carbonaceous material such as an Si-C composite or an Sn-C composite, and one thereof or a mixture of two or more thereof may be used. In addition, a metal lithium thin film may be used as the negative electrode active material. The negative electrode active material may be included in an amount of 80 wt% to 99 wt% based on the total weight of the negative electrode active material layer.

The binder is a component for assisting in binding between a conductive material, an active material, and a current collector, and is typically added in an amount of 0.1 wt% to 10 wt% based on the total weight of the negative electrode active material layer. Examples of the binder may include polyvinylidene fluoride (PVDF), polyvinyl alcohol, carboxymethyl cellulose (CMC), starch, hydroxypropyl cellulose, regenerated cellulose, polyvinylpyrrolidone, polytetrafluoroethylene, polyethylene, polypropylene, an ethylene-propylene-diene monomer (EPDM), a sulfonated-EPDM, styrene-butadiene rubber, nitrile-butadiene rubber, fluorine rubber, various copolymers thereof, and the like.

The conductive material is a component for further improving the conductivity of the negative electrode active material, and may be added in an amount of 10 wt% or less, preferably 5 wt% or less based on the total weight of the negative electrode active material layer. The conductive material is not particularly limited as long as it has conductivity without causing a chemical change in the battery, and for example, graphite such as natural graphite or artificial graphite; carbon black such as acetylene black, Ketjen black, channel black, furnace black, lamp black, or thermal black; conductive fiber such as carbon fiber or metal fiber; fluorinated carbon; metal powder such as aluminum powder or nickel powder; a conductive whisker such as zinc oxide or potassium titanate; a conductive metal oxide such as titanium oxide; a conductive material such as a polyphenylene derivative, or the like may be used.

The negative electrode active material layer may be prepared by applying a negative electrode mixture material, which is prepared by dissolving or dispersing a negative electrode active material, and optionally, a binder, and a conductive material in a solvent, on a negative electrode current collector, followed by drying, or by casting the negative electrode mixture material on a separate support, and then laminating a film obtained by being peeled off from the support on the negative electrode current collector.

Meanwhile, in the above-described lithium secondary battery, the separator is to separate the negative electrode and the positive electrode and to provide a movement path for lithium ions, and any separator typically used as a separator in a lithium secondary battery may be used without particular limitation, and in particular, a separator having high moisture-retention capability for an electrolyte while having low resistance to the movement of electrolyte ions is preferable. Specifically, a porous polymer film, for example, a porous polymer film manufactured using a polyolefin-based polymer such as an ethylene homopolymer, a propylene homopolymer, an ethylene/butene copolymer, an ethylene/hexene copolymer, or an ethylene/methacrylate copolymer, or a stacked structure having two or more layers thereof may be used. In addition, a typical porous non-woven fabric, for example, a non-woven fabric made of glass fiber having a high melting point, polyethylene terephthalate fiber, or the like may be used. Also, a coated separator including a ceramic component or a polymer material may be used to secure heat resistance or mechanical strength, and may optionally be used in a singlelayered or multi-layered structure.

In addition, the electrolyte used in the present invention may be an organic liquid electrolyte, an inorganic liquid electrolyte, a solid polymer electrolyte, a gel-type polymer electrolyte, a solid inorganic electrolyte, a moltentype inorganic electrolyte, or the like, which may be used in the manufacturing of a lithium secondary battery, but is not limited thereto.

Specifically, the electrolyte may include an organic solvent and a lithium salt.

As the organic solvent, any organic solvent may be used without particular limitation as long as it can serve as a medium through which ions involved in an electrochemical reaction of a battery may move. Specifically, as the organic solvent, an ester-based solvent such as methyl acetate, ethyl acetate, γ-butyrolactone, and ε-caprolactone; an ether-based solvent such as dibutyl ether or tetrahydrofuran; a ketonebased solvent such as cyclohexanone; an aromatic hydrocarbonbased solvent such as benzene and fluorobenzene; a carbonate-based solvent such as dimethyl carbonate (DMC), diethyl carbonate (DEC), methylethyl carbonate (MEC), ethylmethyl carbonate (EMC), ethylene carbonate (EC), and propylene carbonate (PC); an alcohol-based solvent such as ethyl alcohol and isopropyl alcohol; nitriles such as R-CN (wherein R is a linear, branched, or cyclic C2 to C20 hydrocarbon group and may include a double-bond aromatic ring or ether bond); amides such as dimethylformamide; dioxolanes such as 1,3-dioxolane; or sulfolanes may be used. Among the above, the carbonate-based solvent is preferred, and a mixture of a cyclic carbonate (e.g., ethylene carbonate or propylene carbonate) having high ion conductivity and a high dielectric constant, which may increase charge/discharge performance of the battery, and a low-viscosity linear carbonate-based compound (e.g., ethylmethyl carbonate, dimethyl carbonate, diethyl carbonate, or the like) is more preferred.

As the lithium salt, any compound may be used without particular limitation as long as it can provide lithium ions used in a lithium secondary battery. Specifically, anions of the lithium salt may be at least one selected from the group consisting of $F^-$, $Cl^-$, $Br^-$, $I^-$, $NO_3^-$, $N(CN)_2^-$, $BF_4^-$, $CF_3CF_2SO_3^-$, $(CF_3SO_2)_2N^-$, $(FSO_2)_2N^-$, $CF_3CF_2(CF_3)_2CO^-$, $(CF_3SO_2)_2CH^-$, $(SF_5)_3C^-$, $(CF_3SO_2)_3C^-$, $CF_3(CF_2)_7SO_3^-$, $CF_3CO_2^-$, $CH_3CO_2^-$, $SCN^-$, and $(CF_3CF_2SO_2)_2N^-$, and as the lithium salt, $LiPF_6$, $LiClO_4$, $LiAsF_6$, $LiBF_4$, $LiSbF_6$, $LiAlO_2$, $LiAlCl_4$, $LiCF_3SO_3$, $LiC_4F_9SO_3$, $LiN(C_2F_5SO_3)_2$, LiN

$(C_2F_5SO_2)_2$, $LiN(CF_3SO_2)_2$, LiCl, LiI, $LiB(C_2O_4)_2$, or the like may be used. It is preferable that the lithium salt is used in a concentration range of 0.1 M to 4.0 M. If the concentration of the lithium salt is included in the above-described range, the electrolyte has suitable conductivity and viscosity, and thus, may exhibit excellent electrolyte performance, and lithium ions may effectively move.

In order to improve lifespan properties of a battery, suppress a decrease in battery capacity, improve discharge capacity of the battery, and the like, the electrolyte may further include, for example, one or more additives such as a haloalkylene carbonate-based compound such as difluoroethylene carbonate, pyridine, triethylphosphite, triethanolamine, cyclic ether, ethylene diamine, n-glyme, hexamethylphosphate triamide, a nitrobenzene derivative, sulfur, a quinone imine dye, N-substituted oxazolidinone, N,N-substituted imidazolidine, ethylene glycol dialkyl ether, ammonium salt, pyrrole, 2-methoxy ethanol, or aluminum trichloride. In this case, the additive may be included in an amount of 0.1 wt% to 5 wt% based on the total weight of the electrolyte.

The lithium secondary battery including the positive electrode material according to the present invention as describe above stably exhibits excellent discharging capacity, output properties, and lifespan properties, and thus, are useful for portable devices such as a mobile phone, a notebook computer, and a digital camera, and in the field of electric cars such as a hybrid electric vehicle (HEV).

Accordingly, according to another embodiment of the present invention, a battery module including the lithium secondary battery as a unit cell, and a battery pack including the battery module are provided.

The battery module or the battery pack may be used as a power source of one or more medium-and-large-sized devices, for example, a power tool, an electric car including an electric vehicle (EV), a hybrid electric vehicle, and a plug-in hybrid electric vehicle (PHEV), or a power storage system.

The external shape of the lithium secondary battery of the present invention is not particularly limited, but may be a cylindrical shape using a can, a square shape, a pouch shape, a coin shape, or the like.

The lithium secondary battery according to the present invention may be used in a battery cell which is used as a power source for a small-sized device, and may also be preferably used as a unit cell for a medium- and large-sized battery module including a plurality of battery cells.

Examples of the medium- and large-sized device include electric vehicles, hybrid electric vehicles, plug-in hybrid electric vehicles, and electric power storage systems, but are not limited thereto.

Hereinafter, the present invention will be described in more detail with reference to specific examples.

## MDOE FOR CARRYING OUT THE INVENTION

### [Examples: Preparation of positive electrode active material]

### Example 1.

To a co-precipitation reactor (capacity 20 L), 4 liters of distilled water was added, and while maintaining the temperature at 50 °C, 100 mL of an ammonia aqueous solution with a 28 wt% concentration was introduced thereto. Then, to the co-precipitation reactor, a transition metal solution in which $NiSO_4$, $CoSO_4$, and $MnSO_4$ were mixed such that the molar ratio of Ni:Co:Mn was 97.0:0.5:2.5, an ammonia aqueous solution, and a sodium hydroxide solution were introduced, and the mixture was subjected to a co-precipitation reaction to form a precursor. Particles of the precursor were separated, washed, and then dried in an oven at 130 °C to prepare a precursor.

The precursor synthesized by the co-precipitation reaction, LiOH, and $Al(OH)_3$ were mixed such that the molar ratio of Li: (Ni+Co+Mn):Al was to be 1:0.968:0.032, and heat-treated at 720 °C for 20 hours in an oxygen atmosphere to prepare a positive electrode active material having a composition of $Li[Ni_{0.939}Co_{0.005}Mn_{0.024}Al_{0.032}]O_2$.

### Example 2.

A precursor was prepared by the same process as in Example 1. The synthesized precursor, LiOH, and $Al(OH)_3$ were mixed such that the molar ratio of Li: (Ni+Co+Mn):Al was to be 1:0.978:0.022, and heat-treated at 720 °C for 20 hours in an oxygen atmosphere to prepare a positive electrode active material having a composition of $Li[Ni_{0.949}Co_{0.005}Mn_{0.024}Al_{0.022}]O_2$.

### Example 3.

A precursor was prepared by the same process as in Example 1. The synthesized precursor, LiOH, and $Al(OH)_3$ were mixed such that the molar ratio of Li: (Ni+Co+Mn):Al was to be 1:0.989:0.011, and heat-treated at 720 °C for 20 hours in an oxygen atmosphere to prepare a positive electrode active material having a composition of $Li[Ni_{0.960}Co_{0.005}Mn_{0.024}Al_{0.011}]O_2$.

### Example 4.

To a co-precipitation reactor (capacity 20 L), 4 liters of distilled water was added, and while maintaining the temperature at 50 °C, 100 mL of an ammonia aqueous solution with a 28 wt% concentration was introduced thereto. Then, to the co-precipitation reactor, a transition metal solution in which $NiSO_4$, $CoSO_4$, and $MnSO_4$ were mixed such that the molar ratio of Ni:Co:Mn was to be 96.0:3.0:1.0, an ammonia aqueous solution, and a sodium hydroxide solution were introduced, and the mixture was subjected to a co-precipitation reaction to form a precursor. Particles of the precursor were separated, washed, and then dried in an oven at 130 °C to prepare a precursor.

The precursor synthesized by the co-precipitation reaction, LiOH, and $TiO_2$ were mixed such that the molar ratio of Li: (Ni+Co+Mn):Ti was to be 1:0.988:0.012, and heat-treated at 720 °C for 20 hours in an oxygen atmosphere to prepare a positive electrode active material having a composition of $Li[Ni_{0.948}Co_{0.030}Mn_{0.010}Ti_{0.012}]O_2$

### Example 5.

A precursor was prepared by the same process as in Example 4. The synthesized precursor, LiOH, and $TiO_2$ were mixed such that the molar ratio of Li: (Ni+Co+Mn):Ti was to be 1:0.994:0.006, and heat-treated at 720 °C for 20 hours in an oxygen atmosphere to prepare a positive electrode active material having a composition of $Li[Ni_{0.954}Co_{0.030}Mn_{0.010}Ti_{0.006}]O_2$.

### Comparative Example 1.

A precursor was prepared by the same process as in Example 1. The synthesized precursor and LiOH were mixed such that the molar ratio of Li: (Ni+Co+Mn) was to be 1:1, and heat-treated at 720 °C for 20 hours in an oxygen atmosphere to prepare a positive electrode active material having a composition of $Li[Ni_{0.970}Co_{0.005}Mn_{0.025}]O_2$.

### Comparative Example 2.

To a co-precipitation reactor (capacity 20 L), 4 liters of distilled water was added, and while maintaining the temperature at 50 °C, 100 mL of an ammonia aqueous solution with a 28 wt% concentration was introduced thereto. Then, to the co-precipitation reactor, a transition metal solution in which $NiSO_4$ and $CoSO_4$ were mixed such that the molar ratio of Ni:Co was to be 97.0:3.0, an ammonia aqueous solution, and a sodium hydroxide solution were introduced, and the mixture was subjected to a co-precipitation reaction to form a precursor. Particles of the precursor were separated, washed, and then dried in an oven at 130 °C to prepare a precursor.

The precursor synthesized by the co-precipitation reaction, LiOH, and $Al(OH)_3$ were mixed such that the molar ratio of Li: (Ni+Co):Al was to be 1:0.968:0.032, and heat-treated at 720 °C for 20 hours in an oxygen atmosphere to prepare a positive electrode active material having a composition of $Li[Ni_{0.939}Co_{0.029}Al_{0.032}]O_2$.

### Comparative Example 3.

To a co-precipitation reactor (capacity 20 L), 4 liters of distilled water was added, and while maintaining the temperature at 50 °C, 100 mL of an ammonia aqueous solution with a 28 wt% concentration was introduced thereto. Then, to the co-precipitation reactor, a transition metal solution in which $NiSO_4$, $CoSO_4$, and $MnSO_4$ were mixed such that the molar ratio of Ni:Co:Mn was to be 83.0:11.0:6.0, an ammonia aqueous solution, and a sodium hydroxide solution were introduced, and the mixture was subjected to a co-precipitation reaction to form a precursor. Particles of the precursor were separated, washed, and then dried in an oven at 130 °C to prepare a precursor.

The precursor synthesized by the co-precipitation reaction, LiOH, and $Al(OH)_3$ were mixed such that the molar ratio of Li: (Ni+Co+Mn):Al was to be 1:0.968:0.032, and heat-treated at 720 °C for 20 hours in an oxygen atmosphere to prepare a positive electrode active material having a composition of $Li[Ni_{0.803}Co_{0.106}Mn_{0.058}Al_{0.032}]O_2$.

### Comparative Example 4.

A precursor was prepared by the same process as in Example 4. The synthesized precursor and LiOH were mixed such that the molar ratio of Li: (Ni+Co+Mn) was to be 1:1, and heat-treated at 720 °C for 20 hours in an oxygen atmosphere to prepare a positive electrode active material having a composition of $Li[Ni_{0.960}Co_{0.030}Mn_{0.010}]O_2$.

### [Experimental Examples]

**Experimental Example 1. Confirmation of doping content**

For the positive electrode active materials prepared in Examples and Comparative Examples above, the content of Al based on the total weight of each positive electrode active material was measured using an inductively coupled plasma optical emission spectrometer (ICP-OES; Optima 7300DV, PerkinElmer Co.), and shown in Table 1 below.

**Experimental Example 2. Measurement of zeta potential**

The results of measuring zeta potentials of the positive electrode active materials prepared in Examples and Comparative Examples are shown in Table 1 below. The zeta potential was measured using a Zetasizer Pro (manufactured by Malvern Panalytical) instrument at 25 °C after dissolving each positive electrode active material by diluting the same to 0.002 wt% in NMP.

**Experimental Example 3. Measurement of viscosity increase rate**

The positive electrode active materials respectively prepared in Examples and Comparative Examples, PVDF as a binder, and acetylene black as a conductive material were mixed at a weight ratio of 96.5 : 2.0 : 1.5 in N-methylpyrrolidone (NMP) to prepare a positive electrode slurry having a solid content of 70 wt%.

Under the conditions of 25 °C and a relative humidity of 10% or less, a viscosity of the positive electrode slurry was measured immediately after being prepared and the results are shown in Table 1 below, and thereafter, while storing the positive electrode slurry under the same conditions, a viscosity increase rate after 3 hours and 24 hours was measured based on the viscosity measured immediately after the preparation and the results are shown in FIG. 1. In this case, the viscosity was measured using a B-type viscometer (DV2T EXTRA Touch screen viscometer, BROOKFIELD AMETEK Co., Ltd.) by submerging a spindle of the viscometer in each positive electrode slurry and rotating the spindle at 12 rpm for 3 minutes.

[Table 1]

| | Ni/Co/Mn introduction molar ratio | Experimental Example 1 | Experimental Example 2 | Experimental Example 3 |
|---|---|---|---|---|
| | | Content of doping element (ppm) | Zeta potential (mV) | Viscosity (cP) |
| Example 1 | 97.0/0.5/2.5 | 9000 | -48.0 | 2510 |
| Example 2 | 97.0/0.5/2.5 | 6000 | -42.8 | 2715 |
| Example 3 | 97.0/0.5/2.5 | 3000 | -33.6 | 3180 |
| Example 4 | 96.0/3.0/1.0 | 6000 | -46.2 | 2910 |
| Example 5 | 96.0/3.0/1.0 | 3000 | -38.4 | 3100 |
| Comparative Example 1 | 97.0/0.5/2.5 | 0 | -23.1 | 3850 |
| Comparative Example 2 | 97.0/3.0/0 | 9000 | -12.0 | 5170 |
| Comparative Example 3 | 83.0/11.0/6.0 | 9000 | -8.7 | 5910 |
| Comparative Example 4 | 96.0/3.0/1.0 | 0 | -28.0 | 3880 |

Referring to Table 1 above, when the positive electrode active materials of Examples 1 to 5 in which the absolute value of the zeta potential was 30 mV or greater were used, the viscosity of the slurry was exhibited as low as 3,200 cP or less, but when the positive electrode active materials of Comparative Examples 1 to 4 in which the absolute value of the zeta potential was less than 30 mV was used, the viscosity of the slurry was exhibited as high as 3,800 mV or greater.

**Experimental Example 4. Evaluation of capacity and lifespan**

(1) Manufacturing of battery

A positive electrode slurry including the positive electrode active material prepared in each of Examples and Comparative Examples was prepared in the same manner as in Experimental Example 3.

The prepared positive electrode slurry was applied on both surfaces of an aluminum current collector having a

thickness of 15 μm according to a loading amount of 16 mg/cm$^2$, dried at 130 °C, and then placed between two roll-pressing rolls and roll-pressed to manufacture a positive electrode.

A mixture in which natural graphite and artificial graphite were mixed at a weight ratio of 50:50 as a negative electrode active material, SBR and CMC as binders, and SuperC as a conductive material were mixed at a weight ratio of 95.6:1.1:2.3:1.0 in water as a solvent to prepare a negative electrode slurry having a solid content of 60 wt%. The negative electrode slurry was applied on both surfaces of a copper current collector having a thickness of 10 μm according to a loading amount of 4.63 mAh/cm$^2$, dried at 130 °C, and then placed between two roll-pressing rolls and roll-pressed to manufacture a negative electrode.

A porous polyethylene-based separator having a thickness of 15 μm was interposed between the manufactured positive electrode and the negative electrode to prepare an electrode assembly, and the electrode assembly was inserted into a pouch-type battery case, followed by injecting an electrolyte solution thereto to manufacture a secondary battery. In this case, as the electrolyte solution, a solution prepared by dissolving 1 M of LiPF$_6$ in an organic solvent in which ethylene carbonate (EC) and ethylmethyl carbonate (EMC) were mixed at a volume ratio of 1:2 was used.

(2) Measurement of initial capacity and capacity retention rate

A formation process was performed on each of the batteries manufactured above, and then using a PNE-0506 charger/discharger (manufacturer: PNE Solution Co., Ltd.) the batteries were charged to 4.25 V at a 0.2 C rate at 25 °C under CC-CV conditions, and then were CC discharged to 2.5 V at a 0.2 C rate to measure an initial discharge capacity.

By setting the above-described charge/discharge to one cycle, the same charge/discharge was repeated 30 times, and then a capacity retention rate was measured through the following equation. The measurement results are shown in Table 2 below.

- Capacity retention rate (%) = (Discharge capacity after 30 cycles/Initial discharge capacity) × 100

[Table 2]

| | Experimental Example 4 | |
|---|---|---|
| | Initial discharge capacity (mAh/g) | Capacity retention rate (%) |
| Example 1 | 216.4 | 96.8 |
| Example 2 | 219.3 | 94.0 |
| Example 3 | 224.2 | 91.3 |
| Comparative Example 1 | 228.1 | 88.7 |

Referring to Table 2 above, in the cases of Examples 1 to 3 in which a positive electrode active material including Al as a doping element and having an absolute value of zeta potential of 30 mV or greater is used according to an embodiment of the present invention, it can be confirmed that the initial viscosity of a slurry and the viscosity increase rate are low, and the initial capacity and the capacity retention rate are significantly improved compared to Comparative Example 1 in which a positive electrode active material having an absolute value of zeta potential of less than 30 mV is used.

Meanwhile, among Examples, it can be confirmed Examples 1 and 2 in which the absolute value of zeta potential is 40 mV or greater exhibit a significantly high capacity retention rate at 94% or greater.

**Claims**

1. A positive electrode active material comprising:

a lithium nickel-based oxide including nickel, cobalt, and manganese and having a nickel content of 90 mol% or greater among metals excluding lithium; and

a metal element M1 doped on the lithium nickel-based oxide, wherein the metal element M1 is one or more selected from the group consisting of Al, Ti, Zr, W, Mo, and Nb, and

wherein the positive electrode active material has an absolute value of zeta potential measured at room temperature is 30 mV or greater.

2. The positive electrode active material of claim 1, wherein the metal element M1 is included in a content of 3,000 ppm to 10,000 ppm based on the total weight of the positive electrode active material.

3. The positive electrode active material of claim 1, wherein the metal element M1 is Al, Ti or a combination thereof.

4. The positive electrode active material of claim 1, wherein the absolute value of the zeta potential measured at room temperature is 35 mV to 60 mV.

5. The positive electrode active material of claim 1, wherein the lithium nickel-based oxide has a composition of Formula 1 below:

$$[Formula\ 1] \qquad Li_{1+x}(Ni_aCo_bMn_cM1_dM2_e)O_2$$

wherein in Formula 1 above,

M1 is one or more selected from the group consisting of Al, Ti, Zr, W, Mo, and Nb,
M2 is one or more selected from the group consisting of Cu, Fe, V, Cr, Zn, In, Ta, Y, La, Sr, Ga, Sc, Gd, Sm, Ca, Ce, Mg, and B, and
$1+x$, a, b, c, d, and e are each an atomic fraction of an independent element, wherein $-0.2 \leq x \leq 0.2$, $0.90 \leq a < 1$, $0 < b < 0.1$, $0 < c < 0.1$, $0 < d \leq 0.05$, $0 \leq e \leq 0.05$, and $a+b+c+d+e=1$.

6. The positive electrode active material of claim 1, wherein when the positive electrode active material is mixed with a binder and a conductive material in a solvent to prepare a positive electrode slurry, a viscosity increase rate according to Equation 1 below is 100% or less:

$$[Equation\ 1]$$

$$Viscosity\ increase\ rate = (V_1 - V_0)/V_0 \times 100\ (\%)$$

wherein in Equation 1 above,

$V_0$ is a viscosity of the positive electrode slurry measured at room temperature immediately after being prepared, and
$V_1$ is a viscosity of the positive electrode slurry measured after being stored for 24 hours under the conditions of room temperature and a relative humidity of 10% or less.

7. The positive electrode active material of claim 1, wherein the lithium nickel-based oxide has a nickel content of 95 mol% to 99 mol% among metals excluding lithium.

8. The positive electrode active material of claim 1, wherein the lithium nickel-based oxide has a manganese content of 0.5 mol% or greater among metals excluding lithium.

9. A positive electrode slurry comprising the positive electrode active material according to claim 1, a binder, a conductive material, and a solvent.

10. The positive electrode slurry of claim 9, wherein the positive electrode slurry has a solid content of 70 wt% or greater based on the total weight of the positive electrode slurry, and has a viscosity of 3,500 cP or less at room temperature.

11. A positive electrode comprising:

a positive electrode current collector; and
a positive electrode active material layer provided on at least one surface of the positive electrode current collector, wherein the positive electrode active material layer includes the positive electrode active material according to claim 1.

12. A lithium secondary battery comprising:

the positive electrode according to claim 11;
a negative electrode including a negative electrode active material;
a separator interposed between the positive electrode and the negative electrode; and
an electrolyte.

FIG. 1

## INTERNATIONAL SEARCH REPORT

| International application No. |
|---|
| **PCT/KR2024/011810** |

**A. CLASSIFICATION OF SUBJECT MATTER**

**H01M 4/36**(2006.01)i; **H01M 4/525**(2010.01)i; **H01M 4/131**(2010.01)i; **H01M 10/052**(2010.01)i; **H01M 4/505**(2010.01)i; **H01M 4/1391**(2010.01)i; **H01M 4/02**(2006.01)i

According to International Patent Classification (IPC) or to both national classification and IPC

**B. FIELDS SEARCHED**

Minimum documentation searched (classification system followed by classification symbols)

H01M 4/36(2006.01); C01G 53/00(2006.01); H01M 10/05(2010.01); H01M 10/0525(2010.01); H01M 4/50(2010.01); H01M 4/505(2010.01); H01M 4/58(2010.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 리튬 이차전지(lithium secondary battery), 양극 활물질(cathode active material), 도핑(doping), 제타 전위(zeta potential), 점도(viscosity), 니켈(nickel, Ni), 알루미늄(aluminium, Al), 티타늄(titanium, Ti), 겔화(gelation)

**C. DOCUMENTS CONSIDERED TO BE RELEVANT**

| Category* | Citation of document, with indication, where appropriate, of the relevant passages | Relevant to claim No. |
|---|---|---|
| X | KR 10-2022-0032592 A (HITACHI METALS, LTD.) 15 March 2022 (2022-03-15)<br>See claims 1 and 3; paragraphs [0018], [0025]-[0028], [0031], [0038], [0040], [0057], [0114], [0116], [0118]- [0122], [0125]-[0128], [0151]-[0159], [0174] and [0175]; and table 1-1, examples 11-19. | 1-12 |
| A | KR 10-2013-0120916 A (POSCO ES MATERIALS CO., LTD.) 05 November 2013 (2013-11-05)<br>See abstract; and claims 1-14. | 1-12 |
| A | JP 2009-004310 A (MITSUBISHI CHEMICALS CORP.) 08 January 2009 (2009-01-08)<br>See abstract; and claims 1-15. | 1-12 |
| A | WO 2012-020769 A1 (AGC SEIMI CHEMICAL CO., LTD. et al.) 16 February 2012 (2012-02-16)<br>See abstract; and claims 1-14. | 1-12 |

☑ Further documents are listed in the continuation of Box C. ☑ See patent family annex.

| | |
|---|---|
| \* Special categories of cited documents: | "T" later document published after the international filing date or priority date and not in conflict with the application but cited to understand the principle or theory underlying the invention |
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | "&" document member of the same patent family |
| "P" document published prior to the international filing date but later than the priority date claimed | |

| Date of the actual completion of the international search | Date of mailing of the international search report |
|---|---|
| **19 November 2024** | **20 November 2024** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**

International application No.

**PCT/KR2024/011810**

| C. | DOCUMENTS CONSIDERED TO BE RELEVANT | |
|---|---|---|
| Category* | Citation of document, with indication, where appropriate, of the relevant passages | Relevant to claim No. |
| A | KR 10-2016-0026402 A (LG CHEM, LTD.) 09 March 2016 (2016-03-09)<br>See abstract; and claims 1-14. | 1-12 |

Form PCT/ISA/210 (second sheet) (July 2022)

**INTERNATIONAL SEARCH REPORT**
Information on patent family members

International application No.

**PCT/KR2024/011810**

| Patent document cited in search report | | | Publication date (day/month/year) | Patent family member(s) | | | Publication date (day/month/year) |
|---|---|---|---|---|---|---|---|
| KR | 10-2022-0032592 | A | 15 March 2022 | CN | 114270567 | A | 01 April 2022 |
| | | | | EP | 4027410 | A1 | 13 July 2022 |
| | | | | EP | 4027410 | A4 | 25 October 2023 |
| | | | | JP | 7082760 | B2 | 09 June 2022 |
| | | | | KR | 10-2718013 | B1 | 15 October 2024 |
| | | | | US | 2022-0166019 | A1 | 26 May 2022 |
| | | | | WO | 2021-045025 | A1 | 11 March 2021 |
| KR | 10-2013-0120916 | A | 05 November 2013 | KR | 10-1510179 | B1 | 08 April 2015 |
| JP | 2009-004310 | A | 08 January 2009 | JP | 5135912 | B2 | 06 February 2013 |
| WO | 2012-020769 | A1 | 16 February 2012 | None | | | |
| KR | 10-2016-0026402 | A | 09 March 2016 | KR | 10-1772737 | B1 | 12 September 2017 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 1020230105931 A

- WO 1020240008351 A